# EUROPEAN PATENT APPLICATION

(11) **EP 2 518 987 A1**
(43) Date of publication of application: **31.10.2012**
(21) Application number: 10854938.7
(22) Date of filing: 16.11.2010
(51) Int. Cl.: H04M 11/00

(54) **METHOD AND TERMINAL FOR IMPLEMENTING INTERACTIVE GAME BASED ON VISUAL TELEPHONE**

(30) Priority: 23.07.2010 CN 201010234839
(71) Applicant: ZTE Corporation, Shenzhen, Guangdong 518057 (CN)
(72) Inventor: HUA, Beilei, Shenzhen Guangdong 518057 (CN)
(74) Representative: Price, Nigel John King
(86) International application number: PCT/CN2010/078782
(87) International publication number: WO 2012/009908

(57) **Abstract**

The disclosure provides a method and a terminal for implementing an interactive game based on visual telephone. The method includes: after a visual telephone connection is established between a first terminal and a second terminal, the first terminal starts an interactive game and sends game startup information to the second terminal; in a situation that the second terminal determines to participate in the game according to the game startup information, the first terminal sends game content information to the second terminal; and the first terminal receives a key value feedback which is sent by the second terminal according to the game content information in a predetermined mode, and plays the interactive game according to the key value feedback, a game key value input by the first terminal and a preset game rule. With the technical solution in the disclosure, an interactive-game function based on visual telephone can be implemented on a terminal.

## Description

### TECHNICAL FIELD

The disclosure relates to the field of communications, in particular to a method and a terminal for implementing an interactive game based on visual telephone.

### BACKGROUND

In relevant art, a visual telephone service is a multimedia communication service which integrates pictures and videos; during a call process, both parties can see the scene of the opposite party mutually, thereby realizing face-to-face real-time communication.

The visual telephone first appears in a Public Switched Telephone Network (PSTN) and an Integrated Services Digital Network (ISDN) and regulates a corresponding criterion: International Telecommunication Union-Telecommunication Standardization Sector (ITU-T) H.324. The protocol stack of the visual telephone of the 3^{rd}-Generation mobile communication technology mainly is a 3G-324M protocol system, wherein the 3G-324M is a framework standard regulated by the 3^{rd}-Generation Partnership Project (3GPP) organization and the regulation basis is ITU-T H.324M, in which, H.324M is expansion of the mobile part of H.324 standard.

The 3G-324M protocol stack is a systematic solution of a mobile multimedia telephone, including: voice, video, user data, multiplexing of control data, separation protocol ITU-T H.223 (Video coding for low bit rate communication), and session control protocol ITU-T H.245 (Control protocol for multimedia communication), wherein the H.324 standard controls and coordinates the H.223 and H.245 protocols to implement a call initiated by an upper layer.

At present, in the conventional art, an interactive-game function based on visual telephone can not be implemented on a terminal.

### SUMMARY

The disclosure provides a method and a terminal for implementing an interactive game based on visual telephone, to solve the problem in the conventional art that an interactive-game function based on visual telephone can not be implemented on a terminal.

A method for implementing an interactive game based on visual telephone, including: after a visual telephone connection is established between a first terminal and a second terminal, starting by the first terminal an interactive game and sending, by the first terminal, game startup information to the second terminal; in a situation that the second terminal determines to participate in the game according to the game startup information, sending, by the first terminal, game content information to the second terminal; receiving by the first terminal a key value feedback, which is sent by the second terminal according to the game content information in a predetermined mode, and playing, by the first terminal, the interactive game according to the key value feedback, a game key value input by the first terminal and a preset game rule.

The game startup information may include at least one of the following: a game startup picture, a game startup video.

The game content information may include at least one of the following: a game content picture, a game content video.

The predetermined mode may include: a Dual Tone Multiple Frequency (DTMF) mode.

The receiving by the first terminal a key value feedback which is sent by the second terminal according to the game content information in a predetermined mode and continuing to play the interactive game according to the key value feedback, a game key value input by the first terminal and a preset game rule may include: after receiving the key value feedback, judging, by the first terminal, whether the key value feedback is a valid key value; if the key value feedback is a valid key value, determining updated game content information according to the preset game rule and sending the updated game content information to the second terminal; otherwise, waiting the second terminal to send a valid key value feedback; during the game, determining by the first terminal the updated game content information according to the game key value input by the first terminal itself and sending by the first terminal the updated game content information to the second terminal; and
when the first terminal inputs a preset game ending key, sending by the first terminal a game ending picture and/or a game ending video to the second terminal and disconnecting by the first terminal the visual telephone connection; or, when the second terminal inputs a preset game ending key, receiving by the first terminal a game ending key value feedback sent by the second terminal, displaying by the first terminal a game ending picture and/or a game ending video on by the first terminal itself, sending by the first terminal the game ending picture and/or the game ending video to the second terminal and disconnecting by the first terminal the visual telephone connection after the interactive game is over.

A terminal for implementing an interactive game based on visual telephone includes:
a start module configured to start an interactive game after a visual telephone connection is established between terminals;
a sending module configured to send game startup information to an opposite terminal, and to send game content information to the opposite terminal in a situation that the opposite terminal determines to participate in the game according to the game startup information; and
a processing module configured to receive a key value feedback, which is sent by the opposite terminal according to the game content information in a predetermined mode, and to play the interactive game according to the key value feedback, a game key value input by the processing module itself and a preset game rule.

The game startup information may include at least one of the following: a game startup picture, a game startup video; and/or the game content information may include at least one of the following: a game content picture, a game content video.

The predetermined mode may include: a DTMF mode.

The processing module may include:
a valid key value judgment sub-module configured to receive the key value feedback and judge whether the key value feedback is a valid key value;
a game ending judgment sub-module configured, in a situation that the valid key value judgment sub-module determines that the key value feedback is a valid key value, to judge whether the valid key value is a game ending key value;
a game rule judgment sub-module configured, when the game ending judgment sub-module determines that the valid key value is not a game ending key value, to determine updated game content information corresponding to the valid key value according to the preset game rule;
a drawing sub-module configured, according to key value information of both parties and the updated game content information, to draw one or more of the following: a game startup picture, a game startup video, a game content picture, a game content video, a game ending picture, a game ending video; and
a display sub-module configured to display a picture or video drawn by the drawing sub-module.

The sending module is further configured, in a situation that the game is over, to send the game ending picture and/or the game ending video to the opposite terminal.

The disclosure has the following beneficial effects:
the problem in the conventional art that an interactive-game function based on visual telephone can not be implemented on a terminal is solved by sending a DTMF value, together with a game picture and/or video, during a call process of a visual telephone, and thus an interactive-game function based on visual telephone can be implemented on a terminal.

### BRIEF DESCRIPTION OF THE DRAWINGS

Fig. 1 shows a flowchart of a method for implementing an interactive game based on visual telephone according to an embodiment of the disclosure;
Fig. 2 shows a flowchart of the detailed process of the method for implementing an interactive game based on visual telephone according to an embodiment of the disclosure;
Fig. 3 shows a structure diagram of a terminal for implementing an interactive game based on visual telephone according to an embodiment of the disclosure; and
Fig. 4 shows a structure diagram of a processing module according to an embodiment of the disclosure.

### DETAILED DESCRIPTION

In order to solve the problem in the conventional art that an interactive-game function based on visual telephone can not be implemented on a terminal, the disclosure provides a method and a terminal for implementing an interactive game based on visual telephone; the disclosure is described below in detail with reference to the accompanying drawings and in conjunction with embodiments. It should be noted that the specific embodiments described hereinafter are used to illustrate the disclosure but to limit the disclosure.

In the relevant art, a Dual Tone Multi Frequency (DTMF) signal in DTMF is formed by superimposing two audio signals that are different in frequency. The frequencies of the two audio signals are from two pre-allocated frequency groups: a line frequency group or a column frequency group. Each pair of audio signals uniquely represents a number or a symbol. There are usually 16 keys on a telephone, including 10 numeric keys (0 to 9) and 6 functional keys (*, #, A, B, C, D). Based on a combination principle, there should be 8 different monotone-frequency signals generally. Thus there are 8 applicable frequencies, then it is called multi-frequency; since 2 frequencies are extracted from the 8 frequencies to be combined for encoding, it is called an encoding technology with 2 extracted from 8. Multiple frequencies internationally applied are 697Hz, 770Hz, 852Hz, 941 Hz, 1209Hz, 1336Hz, 1477Hz and 1633Hz. These 8 frequencies can form 16 different combinations, so as to represent 16 different numeric or functional keys. In actual application, a DTMF signal can be generated by generating and superimposing two sine waves; during a decoding process, an improved Goertzel algorithm can be applied to search the existence of two sine waves from a frequency domain, so as to obtain the DTMF signal after demodulation; that is to say, a DTMF encoder/decoder converts keystroke or numerical information into a dual-tone signal to send out during the encoding process, and checks the existence of the keystroke or numerical information in the received DTMF signal.

### Method embodiment

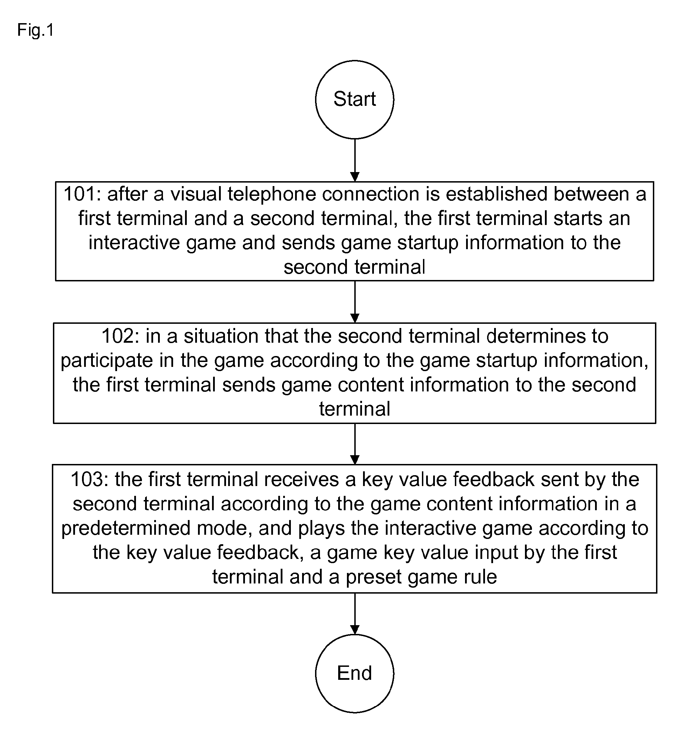

According to an embodiment of the disclosure, a method for implementing an interactive game based on visual telephone is provided and is implemented in conjunction with a DTMF mode. Fig. 1 shows a flowchart of a method for implementing an interactive game based on visual telephone according to an embodiment of the disclosure; as shown in Fig. 1, the method for implementing an interactive game based on visual telephone according to the embodiment of the disclosure comprises the following processes:
step 101: after a visual telephone connection is established between a first terminal (terminal A) and a second terminal (terminal B), the first terminal starts an interactive game and sends game startup information to the second terminal; preferably, in the embodiment of the disclosure, the game startup information includes at least one of the following: a game startup picture, a game startup video;
for example, after a visual telephone connection is established between the terminal A and the terminal B, the terminal A starts an interactive game and sends a game startup picture to the terminal B;
step 102: in a situation that the second terminal determines to participate in the game according to the game startup information, the first terminal sends game content information to the second terminal; preferably, in the embodiment of the disclosure, the game content information includes at least one of the following: a game content picture, a game content video; and
step 103: the first terminal receives a key value feedback, which is sent by the second terminal according to the game content information in a predetermined mode, and plays the interactive game according to the key value feedback, a game key value input by the first terminal and a preset game rule, wherein the predetermined mode includes a DTMF mode.

For example, if the terminal B agrees to participate in the interactive game, the terminal A continues to send a game content picture and/or video to the terminal B to play the interactive game; the terminal B displays the received content, and a user presses a key according to the game content and feeds back the key value to the terminal A through the DTMF mode.

Specifically, step 103 comprises the following processing:
after receiving a key value feedback, the first terminal judges whether the key value feedback is a valid key value; if the key value feedback is a valid key value, the first terminal determines updated game content information according to the preset game rule and sends the updated game content information to the second terminal; otherwise, the first terminal waits the second to send a valid key value feedback; during the game, the first terminal determines the updated game content information according to the game key value input by itself and sends the updated game content information to the second terminal; when the first terminal inputs a preset game ending key, the first terminal sends a game ending picture and/or a game ending video to the second terminal and disconnects the visual telephone connection; or, when the second terminal inputs a preset game ending key, the first terminal receives a game ending key value feedback sent by the second terminal, displays a game ending picture and/or a game ending video on the first terminal, sends the game ending picture and/or the game ending video to the second terminal and disconnects the visual telephone connection after the interactive game is over.

For example, the terminal A receives a DTMF value sent from the called party and judges the DTMF value, if the DTMF value is determined to be a valid key, the terminal A continues to make a game rule judgment and simultaneously sends an updated game content picture and/or video to the terminal B; if the DTMF value is determined to be an invalid key, the terminal A continues to wait the opposite party to send a valid key; during the game, the terminal A plays the game by pressing a key and simultaneously sends a game content picture and/or video updated according to the key value to the terminal B. If the user of the terminal A presses a preset game ending key, then the game is over, and the terminal A sends a game ending picture and/or video to the terminal B and simultaneously hangs off the visual telephone; if the user of the terminal B presses a preset game ending key, then the terminal B sends a key value to the terminal A, then the terminal A displays a game ending picture and/or video on itself and simultaneously returns the picture to the terminal B, then both parties end the game and the terminal A hangs off the visual telephone simultaneously.

The technical scheme of the embodiment of the disclosure is illustrated below by an example in conjunction with accompanying drawings.

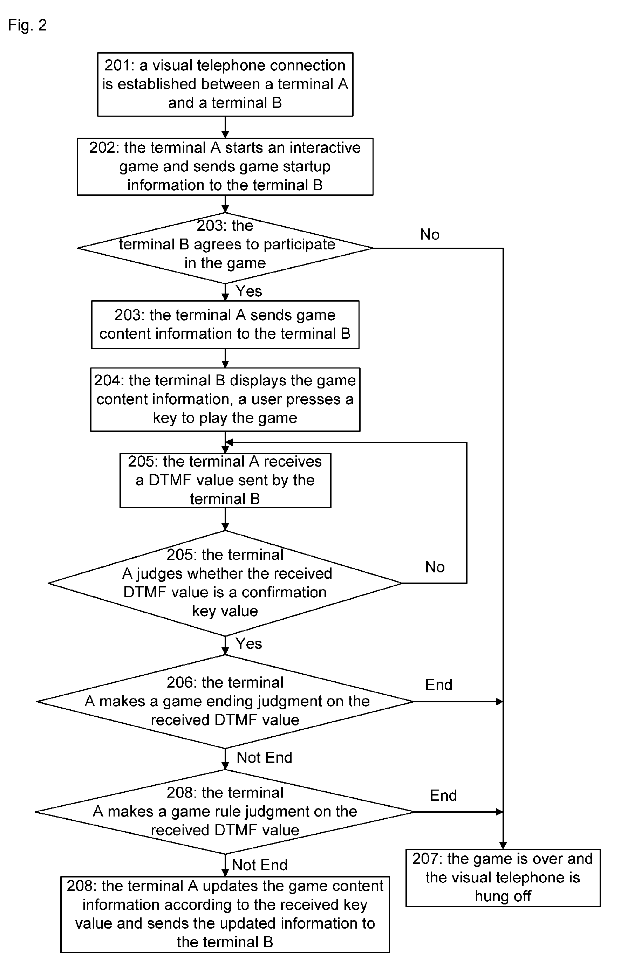

Fig. 2 shows a flowchart of the detailed process of the method for implementing an interactive game based on visual telephone according to the embodiment of the disclosure, comprising the following steps:
step 201: a visual telephone connection is established between terminal A and terminal B;
specifically, the establishment process is the same as that of a common visual telephone; any one of the terminal A and the terminal B can initiate the visual telephone connection; in the embodiment of the disclosure, provided the terminal A initiates a visual telephone call request, the terminal B receives a visual telephone incoming notification, answers the telephone and establishes the visual telephone connection.
step 202: the terminal A starts an interactive game and sends game startup information to the terminal B;
specifically, the terminal A receives a visual telephone connection message returned from the terminal B and starts the interactive game. First, the number of frames of a game picture is calculated and it is judged whether the visual telephone bandwidth is satisfied; if it is satisfied, the game startup information is sent to the terminal B, wherein the content of the game startup information may include: a prompt for requesting the terminal B to participate in the game, and a corresponding function of a key in the following game process, and etc.. Preferably, the game startup information includes a startup picture and a startup video, wherein the startup picture may be in any format of the following: GIF, BMP and JPEG; and the startup video may be in any video format of the following: AVI, RM and MP4;
step 203: if the terminal B agrees to participate in the interactive game, the terminal A continues to send game content information to the terminal B;
specifically, the terminal B sends a DTMF value to the terminal A according to the startup information prompt; if the terminal A determines that the DTMF value is a key value corresponding to the case that the terminal B agrees to participate in the interactive game (for example, key #), and continues to send a game content picture and/or video to the terminal B; otherwise, the terminal A exits the interactive game and hangs off the visual telephone. Wherein the game content picture format is the same as the game startup picture format, and can be any format of GIF, BMP and JPEG; the game content video format is the same as the game startup video format, and can be any video format data of AVI, RM and MP4;
step 204: the terminal B displays game content information, a user presses a key according to the game content and feeds back a key value to the terminal A in the DTMF mode;
specifically, the terminal B receives the game content picture and/or video and displays it on its screen; the user plays the game according to a key function prompted by the game startup information and the current game content picture and/or video, and meanwhile feeds back a key message to the terminal A in the DTMF mode.
step 205: the terminal A receives a DTMF value sent by the terminal B and judges whether it is a confirmation key value, if it is a confirmation key value, step 206 is executed; otherwise, the terminal A continues to wait the opposite party to send a DTMF value;
specifically, the terminal A would receive one or more DTMF values sent from the terminal B; in order to increase the reliability of judgment, judgment can be made by a key order. At the end of pressing each key of the terminal B, a confirmation key (for example, key #) can be added, thus when the terminal receives a plurality of DTMF values, it is needed to judge whether a key before a confirmation key is a valid key, if it is determined to be a valid key, step 206 is executed; if it is determined to be an invalid key, the terminal A continues to wait the opposite party to send a DTMF value until a confirmation key value is received;
step 206: the terminal A makes a game ending judgment on the received DTMF value, if it is a preset game ending key value, step 207 is executed; otherwise, step 208 is executed;
step 207: the game is over and the visual telephone is hung off;
specifically, when the terminal A determines that the received DTMF value is a game ending key value (for example, key *), the game is over; the terminal A displays a game ending picture and/or video on itself, sends the game ending picture and/or video to the terminal B simultaneously and hangs off the visual telephone; the terminal B displays the game ending picture and/or video and hangs off the current visual telephone when receiving a hang-off message; if the game is not over, step 208 is executed;
step 208: the terminal A makes a game rule judgment on the received DTMF value; if the game is not over, then the terminal A continues to send updated game content information, such as a game picture and/or video, to the terminal B, that is to say, the terminal A updates game content information according to the received DTMF value and sends the updated information to the terminal B, then the interfaces of both the terminal A and the terminal B would display the updated game content information. If the game is over, step 207 is executed.

From the processing above, it can be seen that the embodiment of the disclosure implements the interactive game function by sending a DTMF value, together with a game picture and/or video, during a visual telephone call process, wherein both the DTMF mode and the transmission of a game picture and/or video are mature technologies in the present field of visual telephone; the interactive game can be implemented for a user without adding any complex software processing or service flow, the research and development cost is low, thus it is very economical.

### Device Embodiment

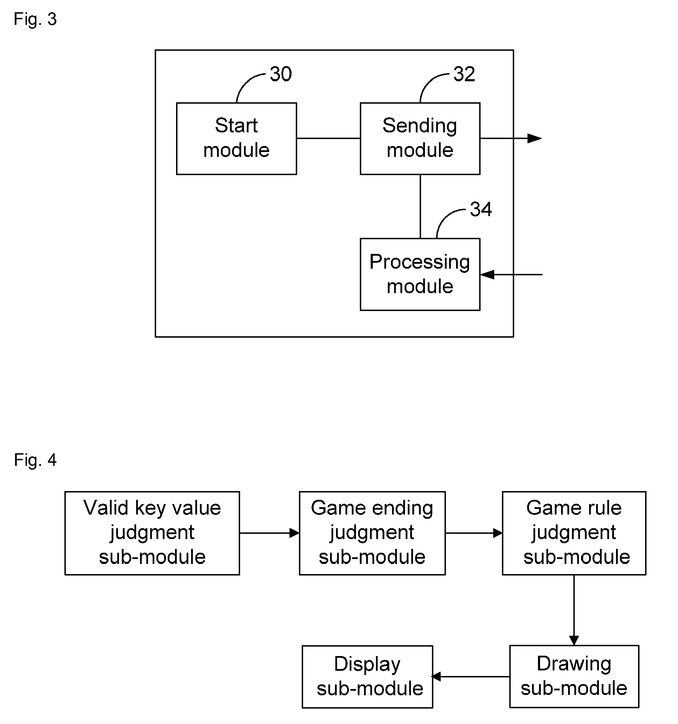

According to an embodiment of the disclosure, a terminal for implementing an interactive game based on visual telephone is provided. Fig. 3 shows a structure diagram of a terminal for implementing an interactive game based on visual telephone according to the embodiment of the disclosure; as shown in Fig. 3, the terminal for implementing an interactive game based on visual telephone according to the embodiment of the disclosure comprises: a start module 30, a sending module 32 and a processing module 34; each module of the embodiment of the disclosure is illustrated below in detail.

Specifically, the start module 30 is configured to start an interactive game after a visual telephone connection is established between terminals;
the sending module 32 is configured to send game startup information to an opposite terminal, and to send game content information to the opposite terminal in a situation that the opposite terminal determines to participate in the game according to the game startup information; preferably, in the embodiment of the disclosure, the game startup information includes at least one of the following: a game startup picture, a game startup video; the game content information includes at least one of the following: a game content picture, a game content video.

In a situation that the game is over, the sending module 32 is further configured to send a game ending picture and/or a game ending video to the opposite terminal.

The processing module 34 is configured to receive a key value feedback, which is sent by the opposite terminal according to the game content information in a predetermined mode, and to play the interactive game according to the key value feedback, a game key value input by the processing module itself and a preset game rule, wherein the predetermined mode includes: a DTMF mode.

Specifically, Fig. 4 shows a structure diagram of the processing module according to an embodiment of the disclosure; as shown in Fig. 4, the processing module 34 specifically comprises:
a valid key value judgment sub-module configured to receive a key value feedback and judge whether the key value feedback is a valid key value; preferably, one key value before the conformation key (for example, key #) is a valid key value;
a game ending judgment sub-module configured, in a situation that the valid key value judgment sub-module determines that the key value feedback is a valid key value, to judge whether the valid key value is a game ending key value;
a game rule judgment sub-module configured, when the game ending judgment sub-module determines that the valid key value is not a game ending key value, to determine updated game content information corresponding to the valid key value according to the preset game rule;
a drawing sub-module configured, according to key value information of both parties and the updated game content information, to draw one or more of the following: a game startup picture, a game startup video, a game content picture, a game content video, a game ending picture, a game ending video; for example, pictures representing game startup, game content and game ending are drawn according to key messages of both parties and the game rule; and
a display sub-module configured to display a picture or video drawn by the drawing sub-module.

It should be noted that the modules in the embodiment of the disclosure can be implemented through software, hardware or combination of hardware and software. The embodiments of the disclosure are not only suitable for mobile terminals, but also suitable for any terminal device configured with a touch screen.

The problem in the conventional art that an interactive-game function based on visual telephone can not be implemented at a terminal is solved by sending a DTMF value, together with a game picture and/or video, during a call process of a visual telephone, and the interactive-game function based on visual telephone can be implemented on a terminal.

The preferred embodiments of the disclosure are disclosed for the purpose of demonstration. However, those skilled in the art should understand that any improvement, adding or replacement is possible, thus the scope of the disclosure should not be limited to the embodiments above.

## Claims

1. A method for implementing an interactive game based on visual telephone, comprising:
after a visual telephone connection is established between a first terminal and a second terminal, starting, by the first terminal, an interactive game, and sending, by the first terminal, game startup information to the second terminal;
in a situation that the second terminal determines to participate in the game according to the game startup information, sending, by the first terminal, game content information to the second terminal;
receiving, by the first terminal, a key value feedback, which is sent by the second terminal according to the game content information in a predetermined mode, and playing, by the first terminal, the interactive game according to the key value feedback, a game key value input by the first terminal and a preset game rule.

2. The method according to claim 1, wherein the game startup information comprises at least one of following: a game startup picture, a game startup video.

3. The method according to claim 1, wherein the game content information comprises at least one of following: a game content picture, a game content video.

4. The method according to any one of claims 1 to 3, wherein the predetermined mode comprises: a Dual Tone Multiple Frequency (DTMF) mode.

5. The method according to claim 4, wherein the receiving by the first terminal a key value feedback which is sent by the second terminal according to the game content information in a predetermined mode and continuing to playing the interactive game according to the key value feedback, a game key value input by the first terminal and a preset game rule comprises:
after receiving the key value feedback, judging, by the first terminal, whether the key value feedback is a valid key value;
if the key value feedback is a valid key value, determining updated game content information according to the preset game rule and sending the updated game content information to the second terminal; otherwise, waiting the second terminal to send a valid key value feedback;
during the game, determining, by the first terminal, the updated game content information according to the game key value input by the first terminal itself and sending, by the first terminal, the updated game content information to the second terminal; and
when the first terminal inputs a preset game ending key, sending by the first terminal a game ending picture and/or a game ending video to the second terminal and disconnecting by the first terminal the visual telephone; or, when the second terminal inputs a preset game ending key, receiving by the first terminal a game ending key value feedback from the second terminal, displaying by the first terminal a game ending picture and/or a game ending video on the first terminal itself, sending by the first terminal the game ending picture and/or the game ending video to the second terminal and disconnecting by the first terminal the visual telephone connection after the interactive game is over.

6. A terminal for implementing an interactive game based on visual telephone, comprising:
a start module configured to start an interactive game after a visual telephone connection is established between terminals;
a sending module configured to send game startup information to an opposite terminal, and to send game content information to the opposite terminal in a situation that the opposite terminal determines to participate in the game according to the game startup information; and
a processing module configured to receive a key value feedback, which is sent by the opposite terminal according to the game content information in a predetermined mode, and to play the interactive game according to the key value feedback, a key value input by the processing module itself and a preset game rule.

7. The terminal according to claim 6, wherein
the game startup information comprises at least one of following: a game startup picture, a game startup video; and/or
the game content information comprises at least one of following: a game content picture, a game content video.

8. The terminal according to claim 6 or 7, wherein the predetermined mode comprises: a Dual Tone Multiple Frequency (DTMF) mode.

9. The terminal according to claim 8, wherein the processing module further comprises:
a valid key value judgment sub-module configured to receive the key value feedback and judge whether the key value feedback is a valid key value;
a game ending judgment sub-module configured, when the valid key value judgment sub-module determines that the key value feedback is a valid key value, to judge whether the valid key value is a game ending key value;
a game rule judgment sub-module configured, when the game ending judgment sub-module determines that the valid key value is not a game ending key value, to determine updated game content information corresponding to the valid key value according to the preset game rule;
a drawing sub-module configured, according to key value information of both parties and the updated game content information, to draw one or more of following: a game startup picture, a game startup video, a game content picture, a game content video, a game ending picture, a game ending video; and
a display sub-module configured to display the a picture or video drawn by the drawing sub-module.

10. The terminal according to claim 6 or 7, wherein the sending module is further configured to send the game ending picture and/or the game ending video to the opposite terminal in a situation that the game is over.
